# EUROPÄISCHE PATENTSCHRIFT

(11) **EP 2 818 254 B1**
(45) Veröffentlichungstag und Bekanntmachung des Hinweises auf die Patenterteilung: **28.10.2015**
(21) Anmeldenummer: 14001883.9
(22) Anmeldetag: 30.05.2014
(51) Int. Cl.: B07C 5/02, B07C 1/04

(54) **Vorrichtung zum Vereinzeln von Stückgutteilen**
Device for singulating piece goods
Dispositif de séparation d'objets

(30) Priorität: 26.06.2013 DE 202013005760 U
(43) Veröffentlichungstag der Anmeldung: 31.12.2014
(73) Patentinhaber: BEUMER GmbH & Co. KG, 59267 Beckum (DE)
(72) Erfinder: Brunsen, Hermann, 59269 Beckum (DE)
(74) Vertreter: Philipp, Matthias

(56) Entgegenhaltungen:
- WO-A1-90/11142
- DE-A1- 4 129 142
- DE-A1-102007 038 834

## Beschreibung

Die Erfindung betrifft eine zum Beispiel aus DE-A-4129142 bekannte Vorrichtung zum Vereinzeln von Stückgutteilen, mit einer Gruppe von Zuführlinien oder -einrichtungen zum Zuführen von Stückgutteilen, die beispielsweise in dreidimensionaler (haufenartige, ungeordnete Anordnung neben- und übereinander), zweidimensionaler (teils neben-, teils aneinander) oder eindimensionaler (linienförmig aneinander oder hintereinander) Bulk-Anordnung angeliefert werden, wobei das Ziel der Vereinzelung darin besteht, die einzelnen Stückgutteile auf einer Fördereinrichtung einzeln hintereinander anzuordnen, ohne dass Stückgutteile aufeinander oder unmittelbar nebeneinander liegen, wobei zwischen jedem einzelnen Stückgutteil und einem zunächst liegenden Stückgutteil ein Mindestabstand bestehen soll, beispielsweise 1 cm, 5 cm oder 10 cm, so dass eine eindeutige und fehlerfreie Erfassung eines jedem einzelnen Stückgutteil zugeordneten Identifikationsmerkmals oder Sortiermerkmals möglich ist, das sich beispielsweise in Form eines RFID-Chips oder eines Barcodes in, an oder auf dem Stückgutteil befinden kann.

Im Zusammenhang mit der Entladung von Paketen aus Wechselbehältern ist eine Vorrichtung zur Vereinzelung von Paketen bekannt, bei denen aus Wechselbehältern entladene Pakete in Form eines dreidimensionalen Bulk-Paketstroms nacheinander einer ersten Vereinzelungsstufe und einer zweiten Vereinzelungsstufe zugeführt werden. In der ersten Vereinzelungsstufe erfolgt eine Vereinzelung mit einer leistungsfähigen Vereinzelungseinrichtung, die eine durchschnittliche Vereinzelungsrate von beispielsweise 99% aufweist. Der die Vereinzelungseinrichtung verlassende Strom von Paketen, der fast ausschließlich aus vereinzelten und zu einem geringen Anteil aus nicht vereinzelten Paketen besteht, wird von einem Kamerasystem geprüft und mittels einer Abtrenneinrichtung in einen Strom vereinzelter Pakete und einen Strom nicht vereinzelter Pakete getrennt. Die nicht vereinzelten Pakete durchlaufen die zweite Vereinzelungsstufe, die entweder aus einer manuellen Nachbearbeitung oder aus einem nochmaligen Durchlauf durch die genannte Vereinzelungseinrichtung besteht. Die auf diese Weise vollständig vereinzelten Pakete werden einem Sortierförderer zur Sortierung und weiteren Verteilung zugeführt.

Bei dieser bekannten Vorgehensweise besteht der Nachteil, dass eine relativ große Anzahl von komplizierten und technisch-konstruktiv relativ aufwendigen Vereinzelungseinrichtungen benötigt wird, entsprechend der Anzahl von parallel angeordneten Zuführlinien, um diese und die damit zugeführten Pakete verarbeiten zu können. Da sämtliche zugeführten Pakete durch die leistungsfähige Vereinzelungseinrichtung hindurchgehen, muss diese hinsichtlich ihres maximalen Durchsatzes entsprechend angepasst sein.

Die Aufgabe der Erfindung besteht darin, eine Vorrichtung zum Vereinzeln von Stückgutteilen dahingehend zu verbessern, dass eine im Vergleich zum Stand der Technik geringere Anzahl von relativ leistungsfähigen und kostenaufwendigen Vereinzelungseinrichtungen, bezogen auf eine gegebene Anzahl von Zuführlinien, benötigt wird.

Diese Aufgabe wird erfindungsgemäß durch eine Vorrichtung zum Vereinzeln von Stückgutteilen wie beispielsweise Paketen gelöst, mit einer Gruppe von Zuführeinrichtungen zum Zuführen von Stückgutteilen, wobei jeder Zuführeinrichtung eine erste Vereinzelungseinrichtung zum Vereinzeln der mit dieser Zuführeinrichtung zugeführten Stückgutteile zugeordnet ist und den ersten Vereinzelungseinrichtungen der Gruppe von Zuführeinrichtungen, die eine erste Vereinzelungsstufe bilden, eine zweite Vereinzelungsstufe zum Vereinzeln von in der ersten Vereinzelungsstufe nicht vereinzelten Stückgutteilen nachgeordnet ist, wobei die zweite Vereinzelungsstufe eine zweite Vereinzelungseinrichtung und ein dieser zugeordnetes Erfassungssystem zum Erfassen von durch die zweite Vereinzelungseinrichtung nicht vereinzelten Stückgutteilen aufweist, mit einer der zweiten Vereinzelungsstufe nachgeordneten dritten Vereinzelungsstufe zum Vereinzeln von in der zweiten Vereinzelungsstufe nicht vereinzelten Stückgutteilen, die aus einer manuellen Nachvereinzelung von durch die zweite Vereinzelungsstufe nicht vereinzelten Stückgutteilen oder einer Rückführung der von dem Erfassungssystem erfassten, nicht vereinzelten Stückgutteile zum wiederholten Durchlauf der zweiten Vereinzelungsstufe besteht, mit einer Abförderstrecke zum Abfördern von in der ersten, zweiten und dritten Vereinzelungsstufe vereinzelten Stuckgutteilen, wobei jeder ersten Vereinzelungseinrichtung eine Abtrenneinrichtung zum Trennen von vereinzelten und nicht vereinzelten Stückgutteilen nachgeordnet ist, mit der nicht vereinzelte Stückgutteile der zweiten Vereinzelungsstufe und vereinzelte Stückgutteile der Abförderstrecke zuförderbar sind, und der zweiten Vereinzelungsstufe eine Abtrenneinrichtung zum Trennen von vereinzelten Stückgutteilen nachgeordnet ist, mit der nicht vereinzelte Stückgutteile der dritten Vereinzelungsstufe und vereinzelte Stückgutteile der Abförderstrecke zuführbar sind.

Die erste Vereinzelungseinrichtung kann eine erste durchschnittliche Vereinzelungsrate und die zweite Vereinzelungseinrichtung eine zweite durchschnittliche Vereinzelungsrate aufweisen, wobei die erste durchschnittliche Vereinzelungsrate geringer sein kann als die zweite durchschnittliche Vereinzelungsrate.

Die zweite Vereinzelungseinrichtung kann eine eigenständige, interne Regelung unabhängig von dem Kamerasystem aufweisen, um die Verarbeitungsgeschwindigkeit insbesondere in Abhängigkeit von der erfassten Fehlerquote (Anteil mangelhafter Vereinzelungsereignisse oder der nicht vereinzelten Stückgutteile an der Gesamtanzahl von verarbeiteten Stückgutteilen) zu verändern. Ein zusätzlicher Regelkreis wird durch das optische Erfassungssystem gebildet, mit dem die Verarbeitungsgeschwindigkeit in Abhängigkeit von der von dem optischen Erfassungssystem erfassten Fehlerquote verändert werden kann.

Anstelle der bekannten Vorgehensweise, bei der die zu vereinzelnden Pakete unmittelbar einer leistungsfähigen Vereinzelungseinrichtung zugeführt und "Fehler" dieser Vereinzelungseinrichtung in einer zweiten Stufe korrigiert werden, setzt die Erfindung auf eine mehrstufige Anordnung, bei der jeweils eine Anzahl von vergleichsweise technisch/konstruktiv weniger aufwendigen und meist auch weniger genau arbeitenden, dafür relativ preisgünstigen Vereinzelungseinrichtungen einer vergleichsweise technisch/konstruktiv aufwendigeren und meist auch leistungsfähigeren Vereinzelungseinrichtung vorgeschaltet sind. Als letzte Vereinzelungsstufe ist ähnlich wie beim Stand der Technik entweder eine manuelle Nachvereinzelung oder ein erneuter Durchlauf der vergleichsweise aufwendigeren Vereinzelungseinrichtung der zweiten Stufe vorgesehen.

Die Zuführeinrichtungen können zum Zuführen von Stückgutteilen jeweils in einer eindimensionalen, zweidimensionalen oder dreidimensionalen Bulk-Anordnung ausgebildet sein.

Jede erste Vereinzelungseinrichtung ist bevorzugt als passive Anordnung ausgebildet und weist keine Regelung der Vereinzelungsgeschwindigkeit auf, im Unterschied zum Stand der Technik, wo die erste Vereinzelungsstufe eine aktive, geregelte Vereinzelungseinrichtung mit einer Erfassung mangelhafter Vereinzelungsereignisse und/oder mit einer Regelung der Verarbeitungsgeschwindigkeit umfasst.

Es kann vorgesehen sein, dass die zweite Vereinzelungseinrichtung steuer- oder regelbar ist. Dadurch können mangelhafte Vereinzelungsereignisse erfasst werden und/oder eine Vereinzelungsgeschwindigkeit der zweiten Vereinzelungseinrichtung an eine momentane Vereinzelungsrate (Anzahl vereinzelter Stückgutteile bezogen auf die gesamte Anzahl verarbeiteter Stückgutteile, bezogen auf einen bestimmten Beobachtungszeitraum wie etwa höchstens 5s, 10s, 30s, 1min oder 5min) oder eine momentane Fehlerquote (mangelhafter Vereinzelungsereignisse oder Anzahl mangelhaft vereinzelter Stückgutteile bezogen auf die gesamte Anzahl verarbeiteter Stückgutteile, bezogen auf einen bestimmten Beobachtungszeitraum) angepasst werden.

Die Erfindung sieht bevorzugt vor, dass jede erste Vereinzelungseinrichtung eine fest eingestellte Verarbeitungsgeschwindigkeit aufweist, die unabhängig von der Anzahl von zugeführten Stückgutteilen pro Stunde eingestellt sein kann.

Die erste durchschnittliche Vereinzelungsrate kann zwischen 50% und 90%, insbesondere zwischen 70% und 80% liegen.

Bevorzugt sind alle ersten Vereinzelungseinrichtungen identisch und auf eine gleiche Verarbeitungsgeschwindigkeit eingestellt.

Jede Abtrenneinrichtung kann eine Erfassungseinrichtung zum Erfassen von nicht vereinzelten und/oder zum Erfassen von vereinzelten Stückgutteilen aufweisen, insbesondere eine optische Erfassungseinrichtung wie etwa ein Kamerasystem oder ein Lichtschrankensystem.

Die zweite durchschnittliche Vereinzelungsrate kann mindestens 80% betragen, insbesondere mindestens 95%, 98% oder 99%.

Eine durchschnittliche Vereinzelungsrate ist bezogen auf einen Beobachtungszeitraum, der mindestens 10mal so lang ist wie der für die Bestimmung einer momentanen Vereinzelungsrate verwendete Zeitraum, beispielsweise mindestens 10min, 30min, 1h oder mehrere Stunden.

Es kann vorgesehen sein, dass eine Verarbeitungsgeschwindigkeit der zweiten Vereinzelungseinrichtung in Abhängigkeit von einer Rate von durch die Erfassungseinrichtung erfassten mangelhaften Vereinzelungsereignissen regelbar ist, mit anderen Worten in Abhängigkeit von der Fehlerquote der zweiten Vereinzelungseinrichtung. Da in der Regel die Fehlerquote bei Reduzierung der Verarbeitungsgeschwindigkeit zurückgeht, kann vorgesehen sein, dass die Verarbeitungsgeschwindigkeit der zweiten Vereinzelungseinrichtung reduzierbar ist, beispielsweise um mindestens 10%, 20%, 30% oder 50%, wenn festgestellt wird, dass die Fehlerquote zunimmt. Insbesondere kann die Verarbeitungsgeschwindigkeit proportional zur Fehlerquote reduzierbar sein.

Weiterhin wird ein Verfahren zum Vereinzeln von Stückgutteilen beschrieben, bei dem die zu vereinzelnden Stückgutteile in einer Gruppe von Zuführlinien zugeführt und jeweils einer einer Zuführlinie zugeordneten ersten Vereinzelungsstation zugeführt werden, wobei die der Gruppe von Zuführlinien zugeordneten ersten Vereinzelungsstationen eine erste Vereinzelungsstufe bilden, in jeder ersten Vereinzelungsstation mit einer ersten durchschnittlichen Vereinzelungsrate vereinzelt und vereinzelte Stückgutteile von nicht vereinzelten Stückgutteilen getrennt werden, die nicht vereinzelten Stückgutteile der ersten Vereinzelungsstufe zusammengeführt und einer zweiten Vereinzelungsstufe zugeführt werden, in der die Stückgutteile mit einer zweiten durchschnittlichen Vereinzelungsrate vereinzelt und vereinzelte Stückgutteile von nicht vereinzelten Stückgutteilen getrennt werden, wobei nicht vereinzelte Stückgutteile einer dritten Vereinzelungsstufe zugeführt werden, in der die Stückgutteile entweder von Hand nachvereinzelt werden oder erneut der zweiten Vereinzelungsstufe zugeführt werden, und vereinzelte Stückgutteile der ersten, zweiten und dritten Vereinzelungsstufen zusammengeführt werden.

Es besteht die Möglichkeit, dass die erste durchschnittliche Vereinzelungsrate geringer ist als die zweite durchschnittliche Vereinzelungsrate.

Die Stückgutteile können in jeder ersten Vereinzelungsstation mit einer fest eingestellten, insbesondere für alle ersten Vereinzelungsstationen gleichen Verarbeitungsgeschwindigkeit verarbeitet werden.

Weiterhin kann vorgesehen sein, dass die Stückgutteile in der zweiten Verarbeitungsstufe mit einer in Abhängigkeit von einer Rate von erfassten, mangelhaft vereinzelten Stückgutteilen (Fehlerquote) geregelten Verarbeitungsgeschwindigkeit verarbeitet werden. Insbesondere kann vorgesehen sein, dass die Stückgutteile in der zweiten Vereinzelungsstufe mit einer bei ansteigender Fehlerquote reduzierten Verarbeitungsgeschwindigkeit verarbeitet werden, beispielsweise mit proportional zur Fehlerquote reduzierter Verarbeitungsgeschwindigkeit.

Die Vorrichtung kann mit einer zur Durchführung des Verfahrens eingerichteten Steuereinrichtung zur Steuerung der Zuführ-, Vereinzelungs- und Abtrenneinrichtungen und des Erfassungssystems versehen sein.

Die Erfindung wird nachfolgend anhand eines Ausführungsbeispiels erläutert, wobei auf eine Zeichnung Bezug genommen ist, in der
Fig. 1 eine erste Variante einer erfindungsgemäßen Vorrichtung zum Vereinzeln von Stückgutteilen zeigt,
Fig. 2 eine zweite Variante einer erfindungsgemäßen Vorrichtung zum Vereinzeln von Stückgutteilen zeigt, und
Fig. 3 und 4 jeweils eine Variante einer bekannten Vorrichtung zum Vereinzeln von Stückgutteilen zeigen.

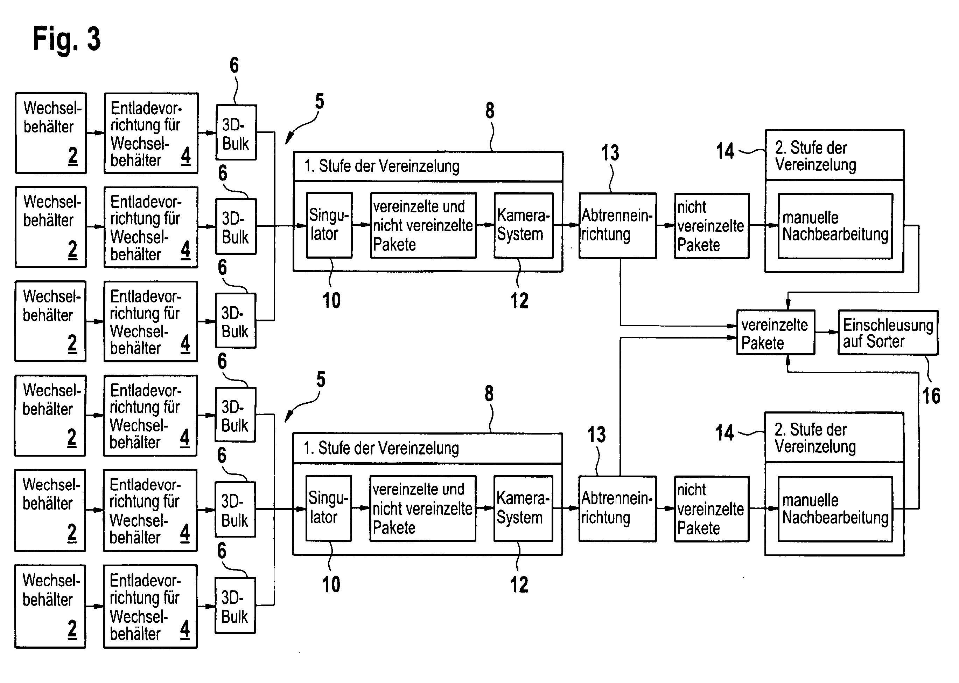

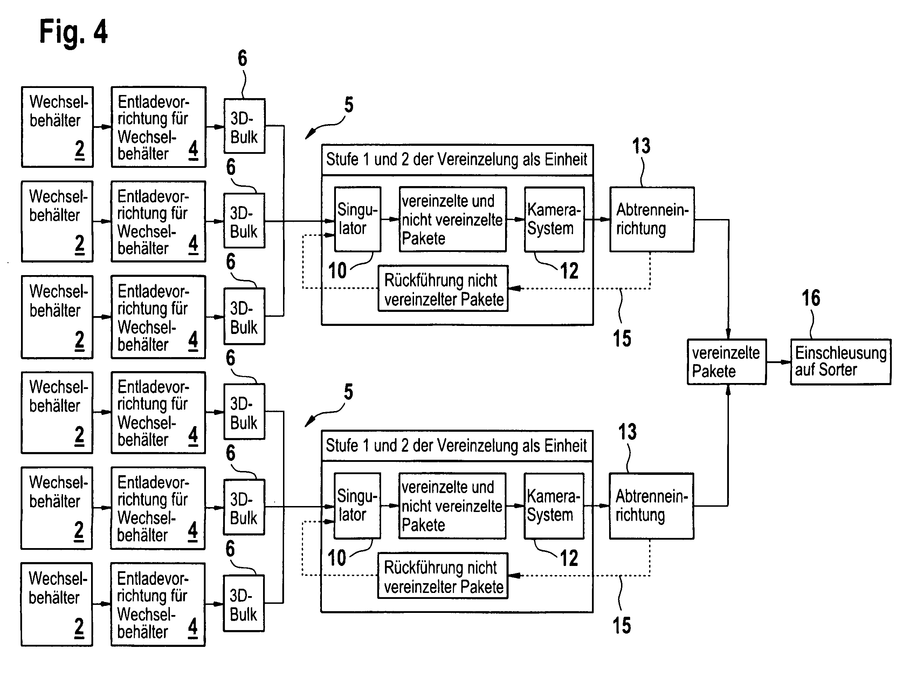

Zunächst sei auf Fig. 3 und 4 zur Erläuterung des Stands der Technik eingegangen.

Fig. 3 erläutert schematisch eine erste Vorrichtung zum Vereinzeln von Paketen gemäß dem Stand der Technik, wobei beispielhaft die Vorgehensweise in einem Postverteilzentrum dargestellt ist. Stückgutteile in Form von Paketen werden in Wechselbehältern 2, beispielsweise mit LKW, angeliefert und mit Hilfe einer teil- oder vollautomatischen Entladevorrichtung 4, beispielsweise mittels eines Roboters mit angeschlossener Fördertechnik, aus den Wechselbehältern 2 entladen. Nach der Entladung liegen die Pakete als Schüttgut oder 3D-Bulk (haufenartige Anordnung mit neben- und übereinander liegenden Paketen) vor und werden mittels jeweils einer Entladevorrichtung 4 zugeordneten Zuführeinrichtungen 6, beispielsweise Förderbändern, der Vereinzelung zugeführt. Jeweils eine Anzahl oder Gruppe 5 von Zuführeinrichtungen 6 führen zu einer ersten Vereinzelungseinrichtung 10 bzw. sind dieser zugeordnet, wobei im dargestellten Beispiel jeweils drei Zuführeinrichtungen 6 einer ersten Vereinzelungseinrichtung 10 zugeordnet sind. Die auch als Singulator bezeichnete erste Vereinzelungseinrichtung 10 bildet eine erste Vereinzelungsstufe 8. Sämtliche auf den drei zugeordneten Zuführeinrichtungen 6 zugeführten Pakete gehen durch die erste Vereinzelungseinrichtung 10 hindurch, wobei die Pakete danach zum überwiegenden Teil vereinzelt und zu einem verbleibenden geringen Teil nicht vereinzelt sind. Aus dem Stand der Technik ist die Verwendung von Vereinzelungseinrichtungen mit einer Vereinzelungsrate von 99% bekannt, wobei 99% der Pakete vereinzelt werden oder mit anderen Worten ein Anteil von 1% der insgesamt hindurchgeleiteten Pakete nicht vereinzelt wird, so dass eine Fehlerquote 1 % beträgt. Mit Hilfe eines Kamerasystems 12 werden die nicht vereinzelten Pakete erfasst, mittels einer von dem Kamerasystem gesteuerten Abtrenneinrichtung 13 von den vereinzelten Paketen getrennt und einer zweiten Vereinzelungsstufe 14 zugeführt, in der eine manuelle Nachbearbeitung oder Nachvereinzelung erfolgt. Die nach Durchgang der zweiten Vereinzelungsstufe 14 vereinzelten Pakete werden mit den bereits nach Durchgang der ersten Vereinzelungsstufe abgetrennten, vereinzelten Paketen zusammengeführt und in eine nachgeordnete Sortiereinrichtung 16 (Sorter) eingeschleust. Fig. 3 zeigt zwei Gruppen 5 von Zuführeinrichtungen 6 mit jeweils drei Zuführeinrichtungen 6, wobei jede Gruppe 5 einer ersten und einer zweiten Vereinzelungsstufe zugeordnet ist, und beide Gruppen einer Sortiereinrichtung 16 zugeordnet sind.

Fig. 4 erläutert eine weitere aus dem Stand der Technik bekannte Vorgehensweise, die sich von der nach Fig. 3 lediglich dadurch unterscheidet, dass die erste Vereinzelungsstufe und die zweite Vereinzelungsstufe nicht voneinander getrennt, sondern als Einheit ausgebildet sind. Die nach Durchgang durch die Vereinzelungseinrichtung 10 nicht vereinzelten Pakete werden von dem Kamerasystem 12 erfasst und im Unterschied zu der Anordnung nach Fig. 3 nicht manuell nachvereinzelt, sondern über eine Rückführung 15 zurückgeführt und erneut durch die Vereinzelungseinrichtung 10 geleitet. Obwohl ein weiterer Durchgang durch die Vereinzelungseinrichtung 10 in aller Regel ausreicht, um sämtliche zunächst nicht vereinzelte Pakete zu vereinzeln, ist nicht ausgeschlossen, dass einzelne Paketgruppen mehr als zweimal durch die Vereinzelungseinrichtung 10 gehen, bis sie vereinzelt worden sind. Auch in diesem Fall beträgt eine Vereinzelungsrate der Vereinzelungseinrichtung 10 beispielsweise 99%, so dass im Durchschnitt etwa 1% aller Pakete mit Hilfe des Kamerasystems 12 ausgesondert und nochmals durch die Vereinzelungseinrichtung 10 geleitet werden.

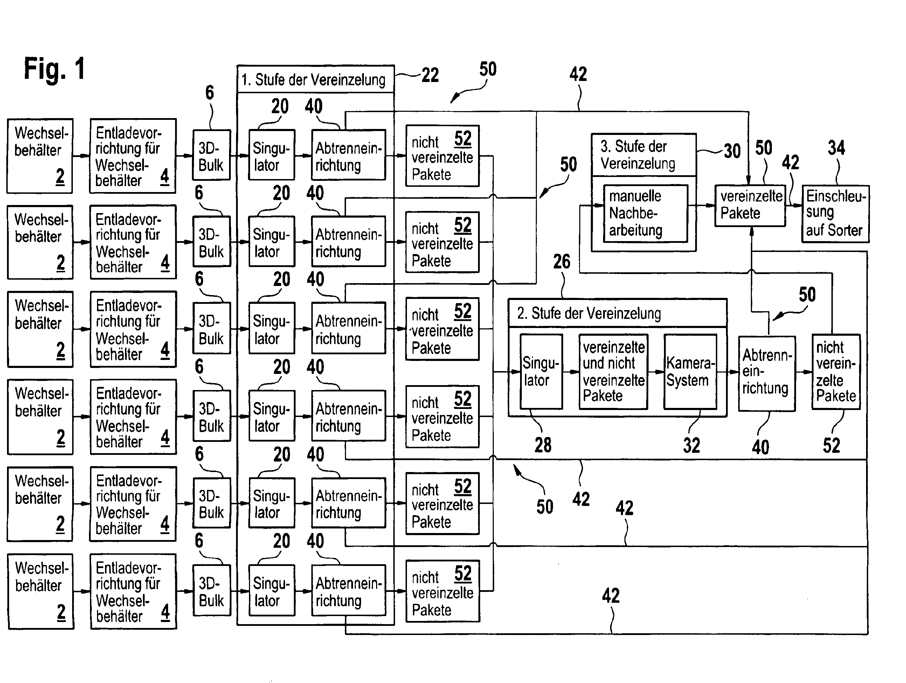

Fig. 1 erläutert die Erfindung anhand der Entladung von Wechselbehältern 2 entsprechend Fig. 3 und 4. Im Unterschied zum Stand der Technik ist vorgesehen, dass jede einzelne Zuführeinrichtung 6 (Zuführlinie) einer ersten Vereinzelungseinrichtung 20 zugeordnet ist (erste Vereinzelungsstation), wobei eine vorgegebene Anzahl oder eine bestimmte Gruppe von ersten Vereinzelungseinrichtungen 20 (im dargestellten Beispiel sechs) zusammen mit jeweiligen Abtrenneinrichtungen 40 eine erste Vereinzelungsstufe 22 bilden. Jeder ersten Vereinzelungseinrichtung 20 ist eine Abtrenneinrichtung 40 nachgeordnet, die vereinzelte Stückgutteile 50 einer Abförderstrecke 42 zuleitet und nicht vereinzelte Stückgutteile 52 einer zweiten Vereinzelungsstufe 26 zuleitet, in der eine einzige zweite Vereinzelungseinrichtung 28 und eine Erfassungseinrichtung 32 zum Erfassen nicht vereinzelter Stückgutteile bzw. Pakete angeordnet ist. Nicht vereinzelte Pakete werden von einer Abtrenneinrichtung 40 von den vereinzelten Paketen abgetrennt. Der zweiten Vereinzelungsstufe 26 ist eine dritte Vereinzelungsstufe 30 nachgeordnet, mit der die nach Durchgang durch die zweite Vereinzelungsstufe 26 nicht vereinzelten, abgetrennten Pakete vereinzelt werden. Vereinzelte Pakete gelangen nach der Abtrenneinrichtung 40 auf eine Abförderstrecke 42 und werden mit den bereits nach der ersten Vereinzelungsstufe 22 abgetrennten, vereinzelten Paketen bei 44 zusammengeführt.

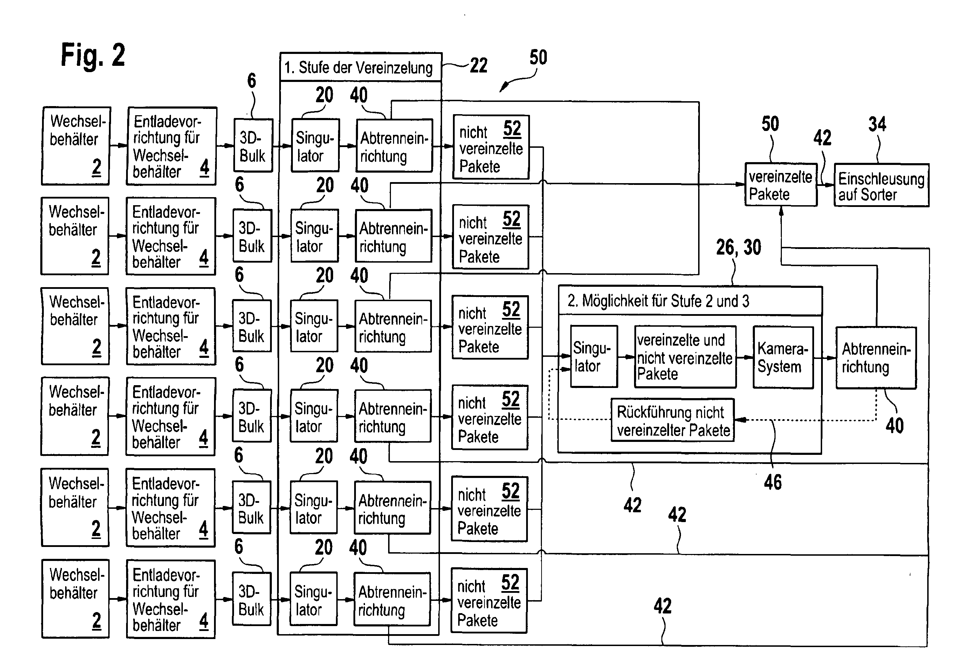

Fig. 1 zeigt eine erste Variante für die Ausbildung der dritten Vereinzelungsstufe 30. Hierbei kann vorgesehen sein, dass die nach Durchgang durch die zweite Vereinzelungsstufe 26 nicht vereinzelten, von den vereinzelten Paketen abgetrennten Pakete manuell nachbearbeitet bzw. nachvereinzelt werden. Fig. 2 zeigt eine Variante, bei der die nach Durchgang durch die zweite Vereinzelungseinrichtung 28 nicht vereinzelten Pakete mit Hilfe der Erfassungseinrichtung 32 erfasst, mittels einer Abtrenneinrichtung 40 von den vereinzelten Paketen abgetrennt und mittels einer Rückführung 46 erneut durch die zweite Vereinzelungseinrichtung 28 geleitet werden. Ähnlich wie bei der oben im Zusammenhang mit dem Stand der Technik beschriebenen Vorgehensweise kann der Fall eintreten, dass nicht vereinzelte Pakete unter Umständen mehr als zweimal durch die zweite Vereinzelungseinrichtung 28 geleitet werden.

Die auf diese Weise vereinzelten Pakete werden auf den jeweiligen Abförderstrecken 42 zusammengeführt und zur weiteren Sortierung und Verteilung in eine Sortiereinrichtung 34 (Sorter) eingeschleust.

Erfindungsgemäß ist bevorzugt vorgesehen, dass die ersten Vereinzelungseinrichtungen 20 eine erste durchschnittliche Vereinzelungsrate aufweisen, die geringer ist als eine zweite durchschnittliche Vereinzelungsrate der zweiten Vereinzelungseinrichtung 28. Die erste durchschnittliche Vereinzelungsrate kann beispielsweise zwischen 70% und 80% liegen, während die zweite durchschnittliche Vereinzelungsrate bevorzugt wesentlich höher liegt, etwa bei 90%, 95% oder 99%.

Die ersten Vereinzelungseinrichtungen 20 sind bevorzugt passive Anordnungen ohne Regelung der Vereinzelungsrate oder der Verarbeitungsgeschwindigkeit. Dadurch besteht die Möglichkeit, die ersten Vereinzelungseinrichtungen 20 zu relativ niedrigen Kosten und mit geringen Ausfallwahrscheinlichkeiten bereitzustellen.

Im Gegensatz dazu ist die zweite Vereinzelungseinrichtung 28 bevorzugt eine steuer- oder regelbare Anordnung, wobei bereits die zweite Vereinzelungseinrichtung 28 als solche mit einer geeigneten Erfassungseinrichtung für mangelhafte Vereinzelungsereignisse versehen sein kann, zusätzlich zu dem Kamerasystem 32, welches eine weitere Regelung oder eine weitere Rückführ- oder Regelschleife bilden kann. Die Regelung kann beispielsweise darin bestehen, dass bei einem Anstieg einer momentanen Fehlerquote der zweiten Vereinzelungseinrichtung deren Verarbeitungsgeschwindigkeit reduziert wird.

Ein Vorteil der Erfindung liegt darin, dass in die zweite Vereinzelungsstufe nicht sämtliche vereinzelten und nicht vereinzelten Pakete gelangen, sondern dank der vorgeschalteten Abtrenneinrichtungen der ersten Stufe nur noch die nicht vereinzelten Pakete, wodurch sich die Möglichkeit ergibt, die in der zweiten Vereinzelungsstufe eingesetzte zweite Vereinzelungseinrichtung an vergleichsweise niedrige Verarbeitungsgeschwindigkeiten anpassen zu können, so dass der konstruktive Aufwand und die Kosten gesenkt werden und die Fehlerquote reduziert wird.

### Bezugszeichenliste

- 2: Wechselbehälter
- 4: Entladevorrichtung
- 5: Gruppe
- 6: Zuführeinrichtung
- 8: erste Vereinzelungsstufe
- 10: Vereinzelungseinrichtung (Singulator)
- 12: Kamerasystem
- 13: Abtrenneinrichtung
- 14: zweite Vereinzelungsstufe
- 15: Rückführung
- 16: Sortiereinrichtung (Sorter)
- 20: erste Vereinzelungseinrichtung
- 22: erste Vereinzelungsstufe
- 26: zweite Vereinzelungsstufe
- 28: zweite Vereinzelungseinrichtung
- 30: dritte Vereinzelungsstufe
- 32: Kamerasystem (Erfassungseinrichtung)
- 34: Sortiereinrichtung (Sorter)
- 40: Abtrenneinrichtung
- 42: Abförderstrecke
- 44: Zusammenführung
- 46: Rückführung
- 50: vereinzelte Stückgutteile
- 52: nicht vereinzelte Stückgutteile

## Patentansprüche

1. Vorrichtung zum Vereinzeln von Stückgutteilen, mit einer Gruppe von Zuführeinrichtungen (6) zum Zuführen von Stückgutteilen, wobei jeder Zuführeinrichtung (6) eine erste Vereinzelungseinrichtung (20) zum Vereinzeln der mit dieser Zuführeinrichtung (6) zugeführten Stückgutteile zugeordnet ist und den ersten Vereinzelungseinrichtungen (20) der Gruppe von Zuführeinrichtungen (6), die eine erste Vereinzelungsstufe (22) bilden, eine zweite Vereinzelungsstufe (26) zum Vereinzeln von in der ersten Vereinzelungsstufe (22) nicht vereinzelten Stückgutteilen nachgeordnet ist, wobei die zweite Vereinzelungsstufe (26) eine zweite Vereinzelungseinrichtung (28) und ein dieser zugeordnetes Erfassungssystem (32) zum Erfassen von durch die zweite Vereinzelungseinrichtung (28) nicht vereinzelten Stückgutteilen aufweist, mit einer der zweiten Vereinzelungsstufe (28) nachgeordneten dritten Vereinzelungsstufe (30) zum Vereinzeln von in der zweiten Vereinzelungsstufe (26) nicht vereinzelten Stückgutteilen, die aus einer manuellen Nachvereinzelung von durch die zweite Vereinzelungsstufe (28) nicht vereinzelten Stückgutteilen oder einer Rückführung (46) der von dem Erfassungssystem (32) erfassten, nicht vereinzelten Stückgutteile zum wiederholten Durchlauf der zweiten Vereinzelungsstufe (26) besteht, mit einer Abförderstrecke (42) zum Abfördern von in der ersten, zweiten und dritten Vereinzelungsstufe (26) vereinzelten Stückgutteilen, wobei jeder ersten Vereinzelungseinrichtung (20) eine Abtrenneinrichtung (40) zum Trennen von vereinzelten und nicht vereinzelten Stückgutteilen nachgeordnet ist, mit der nicht vereinzelte Stückgutteile der zweiten Vereinzelungsstufe (26) und vereinzelte Stückgutteile der Abförderstrecke (42) zuförderbar sind, und der zweiten Vereinzelungsstufe (22) eine Abtrenneinrichtung (40) zum Trennen von vereinzelten Stückgutteilen nachgeordnet ist, mit der nicht vereinzelte Stückgutteile der dritten Vereinzelungsstufe (30) und vereinzelte Stückgutteile der Abförderstrecke (42) zuführbar sind.

2. Vorrichtung nach Anspruch 1, **dadurch gekennzeichnet, dass** die erste Vereinzelungseinrichtung (20) eine erste durchschnittliche Vereinzelungsrate und die zweite Vereinzelungseinrichtung (28) eine zweite durchschnittliche Vereinzelungsrate aufweisen, wobei die erste durchschnittliche Vereinzelungsrate geringer ist als die zweite durchschnittliche Vereinzelungsrate.

3. Vorrichtung nach Anspruch 1 oder 2, **dadurch gekennzeichnet, dass** jede erste Vereinzelungseinrichtung (20) ohne Regelung einer Vereinzelungsgeschwindigkeit ausgebildet ist.

4. Vorrichtung nach Anspruch 1, 2 oder 3, **dadurch gekennzeichnet, dass** die zweite Vereinzelungseinrichtung (28) steuerbar- oder regelbar ist.

5. Vorrichtung nach einem der vorangehenden Ansprüche, **dadurch gekennzeichnet, dass** jede erste Vereinzelungseinrichtung (20) eine fest eingestellte Verarbeitungsgeschwindigkeit aufweist.

6. Vorrichtung nach einem der vorangehenden Ansprüche, **dadurch gekennzeichnet, dass** die erste durchschnittliche Vereinzelungsrate zwischen 50% und 90%, insbesondere zwischen 70% und 80% liegt.

7. Vorrichtung nach einem der vorangehenden Ansprüche, **dadurch gekennzeichnet, dass** alle erste Vereinzelungseinrichtungen (20) identisch sind und auf eine gleiche Verarbeitungsgeschwindigkeit eingestellt sein können.

8. Vorrichtung nach einem der vorangehenden Ansprüche, **dadurch gekennzeichnet, dass** jede Abtrenneinrichtung (40) eine Erfassungseinrichtung zum Erfassen von nicht vereinzelten Stückgutteilen aufweist, insbesondere mit einem Kamera- oder Lichtschrankensystem (32).

9. Vorrichtung nach einem der vorangehenden Ansprüche, **dadurch gekennzeichnet, dass** die zweite durchschnittliche Vereinzelungsrate mindestens 80%, insbesondere mindestens 95%, 98% oder 99% beträgt.

10. Vorrichtung nach einem der vorangehenden Ansprüche, **dadurch gekennzeichnet, dass** eine Verarbeitungsgeschwindigkeit der zweiten Vereinzelungseinrichtung (28) in Abhängigkeit von einer Rate von durch die Erfassungseinrichtung (32) erfassten mangelhaften Vereinzelungsereignissen regelbar ist.

11. Vorrichtung nach Anspruch 10, **dadurch gekennzeichnet, dass** die Verarbeitungsgeschwindigkeit der zweiten Vereinzelungseinrichtung (28) bei zunehmender Fehlerquote reduzierbar ist.

12. Vorrichtung nach einem der vorangehenden Ansprüche, **dadurch gekennzeichnet, dass** der Abförderstrecke (42) eine Sortiereinrichtung (34) nachgeordnet ist.

13. Vorrichtung nach einem der vorangehenden Ansprüche, **dadurch gekennzeichnet, dass** die Vorrichtung mehrere Gruppen von Zuführeinrichtungen (6) mit jeweils zugeordneten ersten, zweiten und dritten Vereinzelungsstufen (22, 26, 30) aufweist, wobei die Abförderstrecken (42) aller Gruppen zusammengeführt sind und diesen eine Sortiereinrichtung (34) nachgeordnet ist, in die sämtliche Stückgutteile aller Zuführeinrichtungen in vereinzelter Form einschleusbar sind.

## Claims

1. Apparatus for marshalling load items into singles, with a group of feed devices (6) for delivering piece goods items, wherein assigned to each feed device (6) is a first isolating device (20) for isolating the piece goods items that are delivered with this feed device (6), and arranged downstream of the first isolating devices (20) of the group of feed devices (6) that form a first isolating stage (22) is a second isolating stage (26) for isolating piece goods items that were not isolated in the first isolating stage (22), wherein the second isolating stage (26) has a second isolating device (28) and a detection system (32) assigned to it for detecting piece goods items that were not isolated by the second isolating device (28), with a third isolating stage (30), arranged downstream of the second isolating stage (28), for isolating piece goods items that were not isolated in the second isolating stage (26), which comprises a manual subsequent isolation of piece goods items that were not isolated by the second isolating stage (28) or a return feed (46) of the non-isolated piece goods items that were detected by the detection system (32) for repeat passage through the second isolating stage (26), with a discharge path (42) for transporting away piece goods items that were isolated in the first, second and third isolating stage (26), wherein arranged downstream of each first isolating device (20) is a separating device (40) for separating isolated and non-isolated piece goods items, with which non-isolated piece goods items can be transported to the second isolating stage (26) and isolated piece goods items can be transported to the discharge path (42), and arranged downstream of the second isolating stage (22) is a separating device (40) for separating isolated piece goods items, with which non-isolated piece goods items can be delivered to the third isolating stage (30) and isolated piece goods items can be delivered to the discharge path (42).

2. Apparatus according to claim 1, **characterised in that** the first isolating device (20) has a first average isolation rate and the second isolating device (28) has a second average isolation rate, with the first average isolation rate being lower than the second average isolation rate.

3. Apparatus according to claim 1 or 2, **characterised in that** each first isolating device (20) is designed without any isolation speed control.

4. Apparatus according to claim 1, 2 or 3, **characterised in that** the second isolating device (28) can be controlled or regulated.

5. Apparatus according to one of the preceding claims, **characterised in that** each first isolating device (20) has a fixed processing speed.

6. Apparatus according to one of the preceding claims, **characterised in that** the first average isolation rate is between 50% and 90%, in particular between 70% and 80%.

7. Apparatus according to one of the preceding claims, **characterised in that** all first isolating devices (20) are identical and can be set to the same processing speed.

8. Apparatus according to one of the preceding claims, **characterised in that** each separating device (40) has a detection apparatus for detecting piece goods items that have not been isolated, in particular with a camera system or light barrier system (32).

9. Apparatus according to one of the preceding claims, **characterised in that** the second average isolation rate is at least 80%, in particular at least 95%, 98% or 99%.

10. Apparatus according to one of the preceding claims, **characterised in that** a processing speed of the second isolating device (28) can be regulated depending on a rate of faulty isolation results detected by the detection apparatus (32).

11. Apparatus according to claim 10, **characterised in that** the processing speed of the second isolating device (28) can be reduced in the case of an increasing error rate.

12. Apparatus according to one of the preceding claims, **characterised in that** a sorting device (34) is arranged downstream of the discharge path (42).

13. Apparatus according to one of the preceding claims, **characterised in that** the apparatus has several groups of feed devices (6), with respectively allocated first, second and third isolating stages (22, 26, 30), wherein the discharge paths (42) of all groups are brought together and arranged downstream of them is a sorting device (34) into which all the piece goods items of all feed devices can be transferred in isolated form.

## Revendications

1. Appareil de triage d'objets à charger en des objets individuels, avec un groupe de dispositifs d'alimentation (6) pour la distribution des objets individuels, dans lequel assigné à chaque dispositif d'alimentation (6) est un premier dispositif de séparation (20) pour séparer les objets individuels qui sont livrés avec ce dispositif d'alimentation (6), et aménagé en aval des premiers dispositifs de séparation (20) du groupe de dispositifs d'alimentation (6) qui forme une première étape de séparation (22) se trouve une deuxième étape de séparation (26) pour séparer des objets individuels qui n'ont pas été séparés dans la première étape de séparation (22), la seconde étape de séparation (26) possédant un second dispositif de séparation (28) et un système de détection (32) qui lui est assigné pour détecter des objets individuels qui n'ont pas été séparés par le second dispositif de séparation (28), avec une troisième étape de séparation (30), aménagée en aval de la seconde étape de séparation (28), pour séparer des objets individuels qui n'ont pas été séparés dans la seconde étape de séparation (26), qui comprend une séparation manuelle ultérieure d'objets individuels qui n'ont pas été séparés par la seconde étape de séparation (28) ou une alimentation retour (46) des objets individuels non séparés qui ont été détectés par le système de détection (32) pour un passage répété à travers la seconde étape de séparation (26), avec un chemin de décharge (42) pour le transport en éloignement des objets individuels qui ont été séparés à la première, seconde et troisième étape de séparation (26), dans lequel aménagé en aval de chaque premier dispositif de séparation (20) se trouve un dispositif de séparation (40) pour séparer des objets individuels séparés et non séparés, avec lesquels des objets individuels non séparés peuvent être transportés à la seconde étape de séparation (26) et les objets individuels séparés peuvent être transportés jusqu'au chemin de décharge (42) et aménagés en aval de la seconde étape de séparation (22) se trouve un dispositif de séparation (40) pour séparer des objets individuels séparés, avec lequel des objets individuels non séparés peuvent être livrés à la troisième étape de séparation (30) et les articles individuels séparés peuvent être livrés sur le chemin de décharge (42).

2. Appareil selon la revendication 1, **caractérisé en ce que** le premier dispositif de séparation (20) a un premier taux de séparation moyen et le second dispositif de séparation (28) a un second taux de séparation moyen, le premier taux de séparation moyen étant inférieur au second taux de séparation.

3. Appareil selon la revendication 1 ou 2, **caractérisé en ce que** chaque premier dispositif de séparation (20) est conçu sans aucun contrôle de la vitesse de séparation.

4. Appareil selon la revendication 1, 2 ou 3, **caractérisé en ce que** le second dispositif de séparation (28) peut être contrôlé ou régulé.

5. Appareil selon l'une quelconque des revendications précédentes, **caractérisé en ce que** chaque premier dispositif de séparation (20) possède une vitesse de traitement fixe.

6. Appareil selon l'une quelconque des revendications précédentes, **caractérisé en ce que** le premier taux de séparation moyen se situe entre 50 % et 90 %, en particulier entre 70 % et 80 %.

7. Appareil selon l'une quelconque des revendications précédentes, **caractérisé en ce que** tous les premiers dispositifs de séparation (20) sont identiques et peuvent être réglés sur la même vitesse de traitement.

8. Appareil selon l'une quelconque des revendications précédentes, **caractérisé en ce que** chaque dispositif de séparation (40) possède un appareil de détection pour la détection d'objets individuels qui n'ont pas été séparés, en particulier avec un système vidéo ou un système à barrière lumineuse (32).

9. Appareil selon l'une quelconque des revendications précédentes, **caractérisé en ce que** le second taux de séparation moyen est d'au moins 80%, en particulier d'au moins 95%, 98% ou 99%.

10. Appareil selon l'une quelconque des revendications précédentes, **caractérisé en ce qu'**une vitesse de traitement du second dispositif de séparation (28) peut être régulée en fonction d'un taux de séparations défectueuses détecté par l'appareil de détection (32).

11. Appareil selon la revendication 10, **caractérisé en ce que** la vitesse de traitement du second dispositif de séparation (28) peut être réduite dans le cas d'une augmentation du taux d'erreurs.

12. Appareil selon l'une quelconque des revendications précédentes, **caractérisé en ce que** un dispositif de tri (34) est aménagé en aval du chemin de décharge (42).

13. Appareil selon l'une quelconque des revendications précédentes, **caractérisé en ce que** l'appareil possède plusieurs groupes de dispositifs d'alimentation (6),avec des première, seconde et troisième étapes de séparation (22, 26, 30) allouées respectivement, dans lequel les chemins de décharge (42) de tous les groupes sont rassemblés et aménagé en aval de ceux-ci se trouve un dispositif de tri (34) dans lequel tous les articles individuels de tous les dispositifs d'alimentation peuvent être transférés sous une forme séparée.
